# EUROPEAN PATENT APPLICATION

(11) **EP 3 493 348 A1**
(43) Date of publication of application: **05.06.2019**
(21) Application number: 17382821.1
(22) Date of filing: 01.12.2017
(51) Int. Cl.: H02J 3/00, H02J 3/46, H02J 13/00

(54) **A COMPUTER IMPLEMENTED CONFIGURATION AND CONTROL DISPLAY SYSTEM FOR NODES OF A PEER-TO-PEER ENERGY NETWORK, COMPUTING DEVICE AND COMPUTER PROGRAMS**

(71) Applicant: Telefonica Innovacion Alpha S.L, 28013 Madrid (ES)
(72) Inventor: Phoel, Wayne, 28013 Madrid (ES); Stalling, Lars, 28013 Madrid (ES)
(74) Representative: Carlos Hernando, Borja

(57) **Abstract**

The system comprising a processor to determine a node state condition of one first node of a plurality of nodes of an energy network and to determine a global network state condition of the energy network; a computing device (10) operatively connected with said processor and comprising a display unit (11); and a user interface (100) provided on said display unit (11) and configured to provide information about said determined node state condition including providing alerts in case of detected errors/malfunctions in the first node and/or in the energy network and providing guidance information for troubleshooting and maintenance of the first node, on a first area (101) of the display unit (11); provide information about said determined global state condition of the energy network on a second area (102) of the display unit (11), adjacent to and below the first area (101); and provide configuration information of the user interface on a third area (103) of the display unit (11).

## Description

### Field of the invention

Present invention relates to a computer implemented configuration and control display system, to a computing device and to computer programs, for nodes of a peer-to-peer energy network adapted for the distribution of energy, preferably electrical energy.

### Background of the invention

Microgrids are an extension of the present centralized grids. Performance monitoring concentrates on determining faults, and measuring reactance and voltage levels because the centralized architecture causes local effects to have global impact. But the centralized aspect results in large, complicated centralized performance monitoring, and typically no ability to configure local devices.

Smart grids provide a digital infrastructure over the traditional grid. Smart meters and smart sensors give insights on usage patterns. But they are typically only focused on understanding time-of-day usage patterns with potential ultimate goal of the utility telling an appliance when to operate based on electricity availability. Pecan Street has developed some techniques for setting policies for energy usage in a single home when connected to local generation and storage as well as to the larger electrical grid.

M-KOPA™ has created a user interface to enable mobile payments for stand-alone home solar systems.

Nest™ thermostats also are an example of existing user interface for monitoring and configuration of a networked system, but focus on home appliances and heating and air conditioning, and it has not been applied to the emerging concept of peer-to-peer energy networks.

There are no current solutions for peer-to-peer energy networks in which users are responsible for upkeep of their own equipment and need to understand the reliability of others. In addition, users need to be able to configure their devices for preferences or priorities. Since there are no deployed advanced peer-to-peer energy networks, the development of configuration and control display systems, provided as a user interface, for such architectures have also not been developed.

### Description of the Invention

Embodiments of the present invention provide according to an aspect a computer implemented configuration and control display system for nodes of a peer-to-peer energy network, wherein said energy network is adapted for the distribution of electrical energy and comprises a plurality of connected nodes, and wherein each node comprises one or more devices including a combination of electrical energy generation elements (e.g. solar panels, wind turbines, diesel generation systems, geothermal systems, a human-powered crank generator electrical, etc.), energy storage elements (e.g. a battery or a capacitor) and/or electrical energy loads (e.g. lighting systems and/or appliances including televisions, radios, kitchen appliances, refrigerators and/or heating equipment, among others) and electrical components for permitting the distribution of the electrical energy with other nodes of the energy network.

The proposed system comprises:
- a processor adapted and configured to determine a node state condition of one first node of the plurality of nodes and to determine a global network state condition of the energy network;
- a computing device (e.g. a flip-phone with numeric keypad and text messaging, a tablet or a smartphone, among others) operatively connected with said processor and comprising a display unit; and
- a user interface provided on said display unit of the computing device and configured to provide information about said determined node state condition of the first node, including providing alerts in case of detected errors/malfunctions in the first node and/or in the energy network and also providing guidance information for troubleshooting and maintenance of the first node, on a first area of the display unit; provide information about said determined global state condition of the energy network on a second area of the display unit, adjacent to and below the first area; and provide configuration information of the user interface on a third area of the display unit, preferably adjacent to and below the second area, however it could also be located above the first area.

The user interface can be a text-based user interface or a graphical user interface.

In an embodiment, the user interface is further configured to provide information regarding a status of the one or more devices of the first node on a first extension area of the display unit, between the first area and the second area.

Moreover, the information regarding a status of the one or more devices may include providing upgrades for the one or more devices on an extendible first sub-area of said first extension area. In addition, the information may also include providing a menu to configure policies on the first node on an extendible second sub-area of the first extension area, said policies including the configuration of a threshold on when to allow or disallow electrical energy usage based on criteria such as price or time-of-day, and/or the configuration of preferences or priorities for how to distribute electrical energy available to the first node.

In an embodiment, the user interface is further configured to provide performance information regarding how the electrical energy is flowing through the first node and its neighbor nodes on a second extension area of the display unit, between the first extension area and the second area. The performance information may include data about losses on the electrical components, peak electrical energy transfer times, local congestion points and/or times at which electrical energy is wasted.

In an embodiment, the user interface is further configured to provide information about reliability of one or more nodes of the plurality of nodes that are connected to the first node on a third extension area of the display unit, between the second extension area and the second area.

In yet another embodiment, the user interface is further configured to provide information about a status of charges of the one or more devices and a status of electrical energy trades to/from other nodes of the energy network on a fourth extension area of the display unit, between the second area and the third area.

Instead on residing on a computing device, the user interface could also reside on a display unit of the one or more devices included in the node.

Embodiments of the present invention also provide a computing device, e.g. a flip-phone with numeric keypad and text messaging, a tablet or a smartphone, among others, comprising a communications unit configured to communicate with a remote processor hosted in at least one first node of a plurality of nodes of a peer-to-peer energy network, said remote processor being adapted and configured to determine a node state condition of at least said first node and a global network state condition of the energy network; a display unit; and a processing unit adapted and configured to generate a user interface on said display unit by providing, on a first area of the display unit, information on said determined node state condition of the first node including providing alerts in case of detected errors/malfunctions in the first node and/or in the energy network and also providing guidance information for troubleshooting and maintenance of the first node; providing, on a second area of the display unit, adjacent to and below the first area, information about said determined global state condition of the energy network; and providing, on a third area of the display unit, preferably adjacent to and below the second area, configuration information of the user interface.

In an embodiment the display unit is touch-sensitive.

Other embodiments of the invention that are disclosed herein also include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention provides a user interface that:
∘ Provides information on the node status (e.g. alerts in cases of malfunctions, feedback for user interactions, and notification on system changes). This information is preferably offered in different levels of interruption depending on their importance.
   - Offers control for user-manageable settings.
   - Offers and explains incentives for nodes maintenance and upgrades.
   - Handles payment and communicates rewards.
   - Offers guidance for troubleshooting and maintenance to enable users to maintain the nodes equipment themselves (e.g. error / malfunction reporting with concrete instructions for fixing and if collaborative action of more than one node owner is necessary, the user interface coordinates the actions of the respective owners, either on the same connected display interface or on separate devices.

The invention provides a more efficient technology for monitoring the state of a node of a distributed peer-to-peer energy network than the conventional approaches designed for hierarchical systems with centralized generation. The generalized user interface design enables intuitive and flexible access to equipment, network, and user status as well as configuration of energy use and trading policies.

### Brief Description of the Drawings

The previous and other advantages and features will be more fully understood from the following detailed description of embodiments, with reference to the attached drawings, which must be considered in an illustrative and non-limiting manner, in which:
Fig. 1 shows an example of a computing device having a display unit in which the user interface is generated.
Fig. 2 schematically illustrates a configuration of the user interface, according to an embodiment of the present invention.
Fig. 3 schematically illustrates a configuration of the user interface, according to another embodiment of the present invention.
Fig. 4 illustrates an example configuration of the second area, or Network Status menu, according to an embodiment of the present invention.
Fig. 5 illustrates an example configuration of the first extension area, or Local Equipment Status menu, according to an embodiment of the present invention.
Fig. 6 illustrates an example configuration of the second extension area, or Local Network Performance menu, according to an embodiment of the present invention.
Fig. 7 illustrates an example configuration of the third extension area, or Neighbor Reliability Information menu, according to an embodiment of the present invention.

### Detailed Description of the Invention and of Preferred Embodiments

Present invention comprises providing a computer implemented configuration and control display system for nodes (e.g. a home) of a peer-to-peer energy network in which a user interface 100 for configuring and monitoring equipment/devices and policies in the nodes is generated.

The energy network under consideration is assumed to consist of several nodes each owned by users of the energy network. The nodes are connected in such a way that electrical energy (e.g. electricity) can flow among them. The network is assumed to be fully connected in that there is a path from one node to any other node, but those paths may use other nodes as intermediaries and there does not need to be a direct connection between any two given nodes. Each node may consist of some combination of electrical energy generation (e.g. solar panels, wind turbines, etc.), electrical energy storage (e.g. batteries, pumped water, etc.), and appliances or loads (e.g. lights, phone chargers, televisions, refrigeration systems, etc.), as well as an energy trading and control system. The arrangement is assumed to be decentralized and enables peer-to-peer energy trading. There can be potentially a centralized monitoring system (e.g. a computing server or similar) that determines a node state condition (particular for each of the nodes) and a global network state condition and that also provides recommendations for upgrades of equipment/device (e.g. of a generation element, of a storage element and/or of an appliance) or rewiring. Such a recommendation system could provide ideas for potential additions of appliances if sufficient power is available or offer recommendations for specific user requests such as "I want to install a TV".

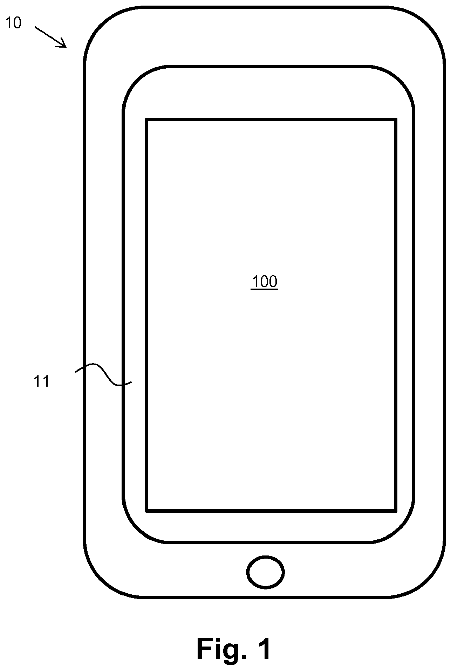

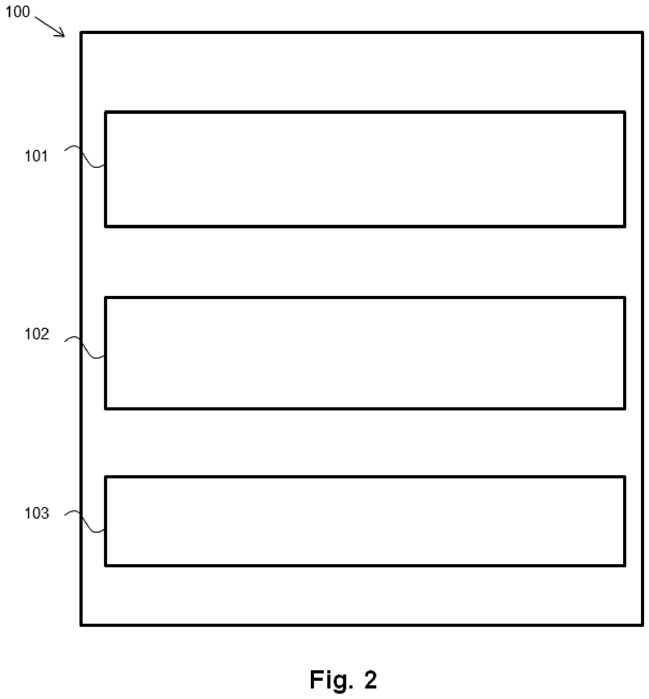

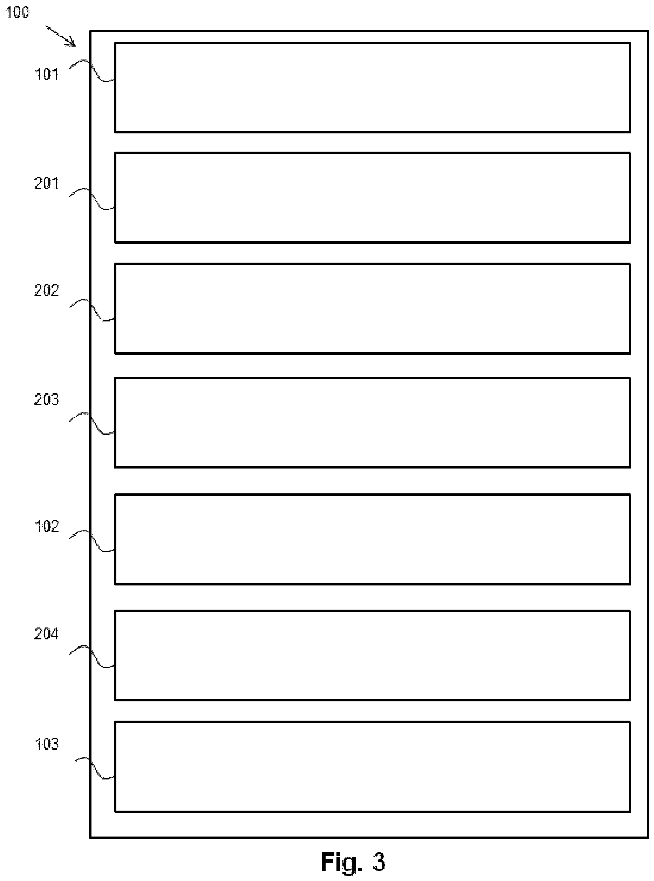

The user interface 100 (see Figs. 2 and 3) is designed so that it can operate on computing devices 10 with varying display and input capabilities, including a flip-phone with numeric keypad and text messaging, to tablet or smartphone, or other computer. Fig. 1 shows an example of a computing device 10 having a display unit 11.

The design of user interface 100 is agnostic to the mechanism for connecting to the control and management planes of the energy network; the network interface is designed such that the connection could be through a physical connection to the energy system owned and operated by the user, or wirelessly to the same system, or alternatively, through a separate communication network that can connect into the control and management planes of the energy network.

Connecting a mobile phone provides a number of advantages / opportunities: App and data integration (leverage mobile applications like weather reports to support energy forecasting and adapt charging and sharing setting accordingly); GPS data from the mobile phone, compare logical network with real world locations to optimize network management and optimization recommendation, etc.); leverage mobile connection (if mobile connectivity is available), enable information services and enable direct customer service.

The user interface 100 has a hierarchical design in which the default information displayed is high-level node health information.

The user interface 100 is not limited to nodes management but it is a service touch point, providing educational content and enabling self-management by the users:
∘ Offers control for user-manageable settings:
   ∘ Energy sharing preferences
   ∘ Community sharing options - ability to set up a community-wide setting to prioritize power at a specific node, e.g. a school or medical office for doctor visits.
∘ Electricity and consumption education
   ∘ How to save energy (show real past consumption to offer potential improvements, best times of the day for certain devices)
∘ Handles payment and communicates rewards
   ∘ status, alerts, payment handling
   ∘ enter payment codes, mobile payment feedback
∘ Controls compatible appliances connected to node (e.g. defines optimal operation times of a device, balances power consumption between devices, etc.)
∘ Provides suggestions for further uses of electrical energy, especially those that could improve productivity or enable new trade.
∘ Offers and explains incentives for node's maintenance and upgrades (incentives are a key driver for system upkeep and growth)
   ∘ Indicates the benefit generated from each existing asset, especially those for networking energy, i.e. cables.
   ∘ Showcase potential of investing in a new asset (e.g. additional solar panel or laying an extra cable to a specific node); calculates projected benefit of investment in a new asset.
   ∘ Indicates impact of an asset not working to highlight need for maintenance or fixing a broken asset (e.g. a broken cable), highlighting the impact on individual as well as on community.
∘ Offers guidance for DIY (do-it-yourself) troubleshooting and maintenance to enable users to maintain node's equipment themselves.
   ∘ The unique bottom-up / distributed nature of this network offers the opportunity to distribute maintenance and repair as well.
   ∘ The user interface 100 identifies the most suited user to fix the problem (e.g. owner of specific asset(s)) and only alerts this user.
      ■ If collaborative action of more than one node owner is necessary, the user interface 100 coordinates the actions of the respective owners, either on the same connected display interface or on separate devices.
   ∘ Error / malfunction reporting with concrete instructions for fixing (e.g. considering AR (Augmented Reality) overlay to guide fixing problems on hardware).
   ∘ Directs customer agent connection
   ∘ P2P support (e.g. connect with other users, user forums, P2P (peer-to-peer) helpdesk, (zendesk, etc.)

Moreover, the user interface 100 is also divided by the locality of the information. That is, there is a component that relates to the configuration and monitoring of local equipment at a node or the nodes corresponding to a user; and there is a component that relates to the global network status. The local modality works best when connected directly to the local equipment, where it may query the status of the equipment directly, although the user interface 100 is designed such that specific equipment can be queried and configured over the network if necessary. Regarding the privacy, while indicating the health of the global energy network is an important feature, other nodes should not be able to see the consumption and benefits of an individual node.

Fig. 2 illustrates the most basic embodiment of the user interface 100. According to this embodiment, the user interface 100 provides on a first area 101 of the display unit 11 information about a determined node state condition of the node, including alerts in case of detected errors/malfunctions in the node (e.g. caused by the equipment/devices) and/or in the energy network, and also provides guidance information for troubleshooting and maintenance of the node (i.e. if the complete node health is not good, additional indicators are presented to guide the user to diagnose the problem, or to contact service personnel, if service is available). Moreover, the user interface 100 also provides on a second area 102 of the display unit 11, information about the determined global state condition of the energy network (e.g. in case a user needs to understand is there are issues farther away than the current neighbor nodes, such as faults or overloads that affect the energy network). The user interface 100 also provides configuration information of the user interface 100 on a third area 103 of the display unit 11, e.g. how to provide the quickest access to the features that user uses most, how the alerts are communicated (e.g. vibration, audible alarm, message to separate phone number, among others), etc.

Therefore, the first area 101 provides a general health indicator of the overall status of the node. The alerts or warnings may further be related to aspects such as payments to/from other nodes of the energy network.

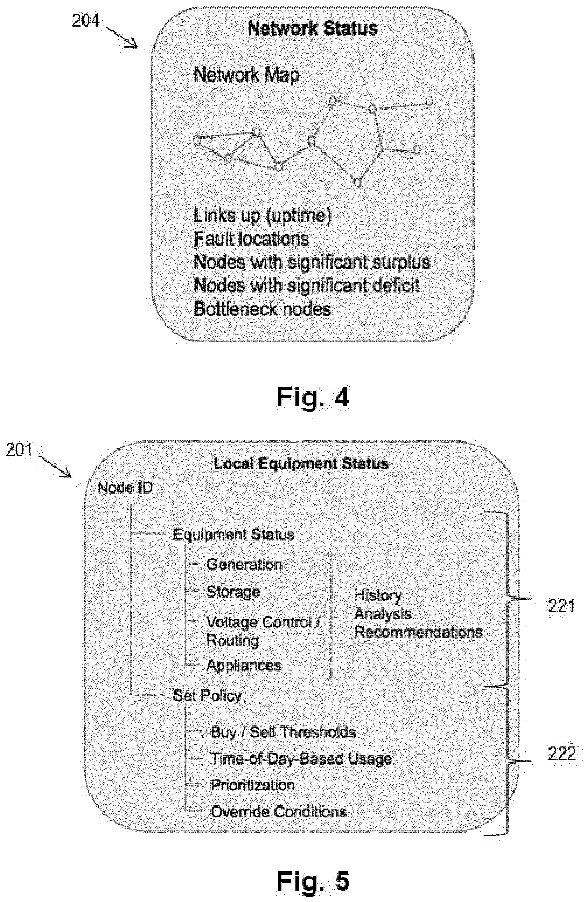

The second area 102 (or Network Status menu) may also include data on energy generation and usage across the energy network in order to evaluate how the local node is performing relative to other nodes and potentially identify new trading partners of topology changes. Fig. 4 shows an embodiment of some of the information that can be included, and how the energy network can be depicted, in the second area 102. In an embodiment, the user can configure a set of parameters to manually exclude a particular node neighbor node from trading electrical energy.

Referring now to Fig. 3 therein it is illustrated another embodiment of the user interface 100. According to this embodiment, besides the information displayed and described for the embodiment of Fig. 2 (i.e. the content provided in 101, 102 and 103 areas of the display unit 11), new display areas (or extension areas as referred in the claims) are included in order to provide additional content in the display unit 11.

In Fig. 3, a first extension area 201 of the display unit 11 (or Local Equipment Status menu), provides information regarding a status of the equipment/devices (generation, storage and/or appliances) of the node. It is assumed that the equipment in the node conform to the system's standard application programming interface (API) for reporting status and configuring policies. Through this Local Equipment Status menu 201, the user can dive down into the status of each device connected in the node, including, for example, historical information on power generation (which may include, if available, comparisons to statistics such as historical weather as well as power generated by similar neighbor nodes in the energy network), storage statistics (such as data on number of cycles of a battery, times that storage is below set threshold, times when storage is full and unable to accept new energy that becomes available), appliance statistics (such as comparison of electrical energy usage to "similar" neighbor nodes, evaluation of electrical energy use compared to prices that fluctuate throughout the day).

This Local Equipment Status menu 201 also provides a sub-menu, or sub-area 221, (see Fig. 5) to evaluate equipment upgrades. The upgrade recommendations may come from the centralized computer system that compares network performance to several topology excursions and recommends topology modifications such as upgrading generation capabilities or running new connections to other nodes in the energy network. Alternatively, the upgrade recommendations may be made by the local equipment given its own monitoring of energy generation and usage.

The Local Equipment Status menu 201 may also provide a sub-area 222 (extendible sub-area as termed in the claims) as a way to configure policies of the node. Such policies can include thresholds on when to allow or disallow electrical energy usage based on criteria such as price or time-of-day. They may also include preferences or priorities for how to distribute electrical energy available to the node, particularly when requested demands exceed availability. These priorities can, for example, specify whether to prioritize charging a local battery over providing electrical energy to a neighbor node, or which appliances are critical for operation when electrical energy is scarce and which appliances should be shut off when insufficient energy is available.

For computing devices 10 with a screen that can show images, a simple diagram with icons of components can be provided for users to navigate options. For computing devices having text-only displays, a menu tree can be provided to work toward the desired status information or configuration feature.

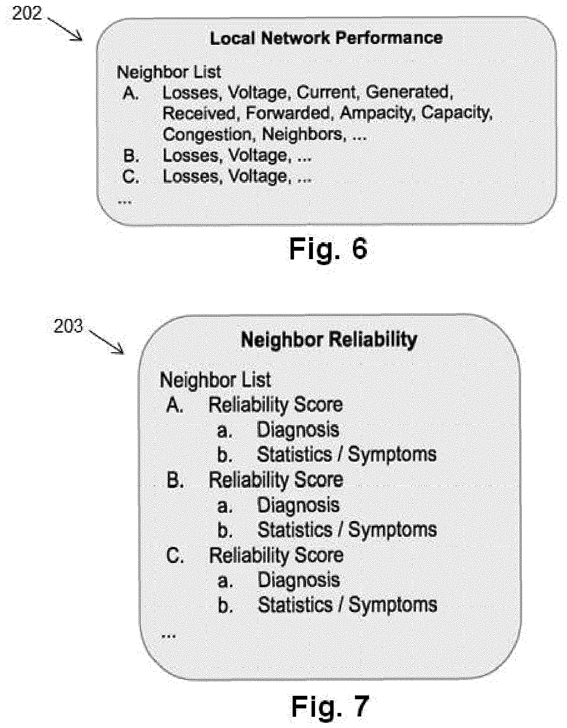

Referring back to Fig. 3, a second extension area 202 of the display unit 11 (or Local Equipment Status menu), enables the user to understand how electrical energy is flowing through the local node and its neighbor nodes. This can include details such as losses on the electrical components (e.g. the wires), peak electrical energy transfer times, local congestion points, times at which electrical energy is wasted, etc. This Local Equipment Status menu 202 (see Fig. 6) also allows for the user to set price preferences for how much to charge trading nodes for supply and or relaying of electrical energy. Such preferences can include dependencies such as time of day, time of year, minimum and/or maximum trading volumes, state of local storage, etc.

Moreover, a third extension area 203 of the display unit 11 (or Neighbor Reliability menu) provides information about reliability of one or more nodes connected to the node, so enabling the user to know how well a trading partner maintains equipment and also how timely payments are made. This may include, see Fig. 7, information regarding the reliability of payments for electrical energy, reliability of transfer electrical energy from a particular node when contracted, etc. This menu 203 can also provide details if the node suspects that a thief is tapping off of a connection to a neighbor node and stealing energy.

The user interface 100 of Fig. 3 also includes a fourth extension area 204 (or Payments menu) to provide information about a status of charges for energy devices (purchased, leased, etc.) and electrical energy trades to/from trading partners. If relevant, it provides the user the ability to make a payment to a trading partner or a third-party who performs service, maintenance, or other network management functions. Alternatively, this menu 204 may provide an interface to set prices and policies for energy trading.

The user interface 100 can be entirely text-based for computing devices 10 that are limited to text inputs and outputs, or if that is the user preference even if the computing device 10 allows richer graphical interfaces. In the text-based interface, the user scrolls through menus, selecting options as navigating a tree. Configurable menus/items can be designed to be selected from a pre-defined list, or entered manually by the user. The textual interface can also facilitate remote, script-based access to node status and configurations.

Alternatively, the user interface 100 can be predominantly graphical, including presenting a map of the energy network and its connections. In the map-based case, users may select a node and dive down into details of that node, which includes performance and reliability status (a departure from the hierarchical menus presented above, but consistent with the overall interface capabilities).

The user interface 100 can also be expanded for the case in which one user owns multiple nodes (or acts on behalf of multiple owners) and wants to monitor and configure them through the same application. In that implementation, the user can select from the list of nodes for which the user is responsible to monitor and configure individual nodes. Alternatively, the user can select a group (or all) nodes to query general status and apply configurations broadly to multiple nodes through a single action.

While there are many parameters and capabilities discussed herein, not all are necessary for any one instantiation. For example, in the case in which a user does not actually own any equipment and rents appliances and buys electrical energy from others, the user interface 100 can be a simple payment platform that shows what electrical energy is used at what price, and enables the user to track payments to providers, and potentially search for other providers who can provide the electrical energy at lower cost (or higher reliability).

The user interface 100 can also support expansion to connect to an optimization routine, likely running remotely. In this implementation, the user may select from different alternative configurations (which could be policy settings, but also wiring to neighbor nodes as well as different equipment) and run comparison of actual usage and costs with an estimate for what it may have been with the alternative configuration using data from the past month.

While the foregoing is directed to embodiments of the present invention, other and further embodiments of the invention may be devised without departing from the basic scope thereof. For example, other aspects may be implemented in hardware or software or in a combination of hardware and software. If implemented in software, the functions may be stored on or encoded as one or more instructions or code on a computer-readable medium.

Computer-readable media includes computer storage media. Storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Disk and disc, as used herein, includes compact disc (CD), laser disc, optical disc, digital versatile disc (DVD), floppy disk and Blu-ray disc where disks usually reproduce data magnetically, while discs reproduce data optically with lasers. Combinations of the above should also be included within the scope of computer-readable media. Any processor and the storage medium may reside in an ASIC. The ASIC may reside in a user terminal. In the alternative, the processor and the storage medium may reside as discrete components in a user terminal.

As used herein, computer program products comprising computer-readable media including all forms of computer-readable medium except, to the extent that such media is deemed to be non-statutory, transitory propagating signals.

The scope of the present invention is defined in the following set of claims.

## Claims

1. A computer implemented configuration and control display system for nodes of a peer-to-peer energy network, wherein said energy network being adapted for the distribution of electrical energy and comprising a plurality of connected nodes, and wherein each node comprising one or more devices including a combination of electrical energy generation elements, electrical energy storage elements and/or electrical energy loads and electrical components for permitting the distribution of the electrical energy with other nodes of the energy network, comprising:
a processor adapted and configured to determine a node state condition of at least one first node of said plurality of nodes and to determine a global network state condition of the energy network;
a computing device (10) operatively connected with said processor and comprising a display unit (11) ; and
a user interface (100) provided on said display unit (11) of the computing device, said user interface (100) comprising being configured to:
- provide information about said determined node state condition of the first node, including providing alerts in case of detected errors/malfunctions in the first node and/or in the energy network and also providing guidance information for troubleshooting and maintenance of the first node, on a first area (101) of the display unit (11);
- provide information about said determined global state condition of the energy network on a second area (102) of the display unit (11), adjacent to and below the first area (101); and
- provide configuration information of the user interface (100) on a third area (103) of the display unit (11), adjacent to and below the second area (102).

2. The system of claim 1, wherein the user interface (100) being further configured to provide information regarding a status of the one or more devices of the first node on a first extension area (201) of the display unit (11), between the first area (101) and the second area (102).

3. The system of claim 2, wherein said information regarding a status of the one or more devices further includes:
providing upgrades for the one or more devices on an extendible first sub-area (221) of said first extension area (201); and/or
providing a menu to configure policies on the first node on an extendible second sub-area (222) of the first extension area (201), said policies including the configuration of a threshold on when to allow or disallow electrical energy usage based on criteria such as price or time-of-day, and/or the configuration of preferences or priorities for how to distribute electrical energy available to the first node.

4. The system of claim 2 or 3, wherein the user interface (100) being further configured to provide performance information regarding how the electrical energy is flowing through the first node and its neighbor nodes on a second extension area (202) of the display unit (11), between the first extension area (201) and the second area (102).

5. The system of claim 4, wherein said performance information includes data about losses on the electrical components, peak electrical energy transfer times, local congestion points and/or times at which electrical energy is wasted.

6. The system of claim 4 or 5, wherein the user interface (100) being further configured to provide information about reliability of one or more nodes of the plurality of nodes that are connected to the first node on a third extension area (203) of the display unit (11), between the second extension area (202) and the second area (102).

7. The system of claim 6, wherein the user interface (100) being further configured to provide information about a status of charges of the one or more devices and a status of electrical energy trades to/from other nodes of the energy network on a fourth extension area (204) of the display unit (11), between the second area (102) and the third area (103).

8. The system of previous claims, wherein the user interface (100) being a text-based user interface or a graphical user interface.

9. The system of previous claims, wherein the computing device (10) comprising a flip-phone with numeric keypad and text messaging, a tablet or a smartphone.

10. A computing device, comprising:
a communications unit configured to communicate with a remote processor hosted in at least one first node of a plurality of nodes of a peer-to-peer energy network, said remote processor being adapted and configured to determine a node state condition of at least said first node and a global network state condition of the energy network;
a display unit (11); and
a processing unit adapted and configured to generate a user interface (100) on said display unit by:
- providing, on a first area (101) of the display unit (11), information on said determined node state condition of the first node including providing alerts in case of detected errors/malfunctions in the first node and/or in the energy network and also providing guidance information for troubleshooting and maintenance of the first node;
- providing, on a second area (102) of the display unit (11), adjacent to and below the first area (101), information about said determined global state condition of the energy network; and
- providing, on a third area (103) of the display unit (11), adjacent to and below the second area (102), configuration information of the user interface (100).

11. The device of claim 10, wherein the display unit (11) is touch-sensitive.

12. The system of claim 10 or 11, wherein the user interface (100) being a text-based user interface.

13. The system of claim 10 or 11, wherein the user interface (100) being a graphical user interface

14. A non-transitory computer program product for generating a user interface on a display unit of a computing device for configuring and controlling nodes of a peer-to-peer energy network, the computer program comprising code instructions that when executed by at least one computer device are configured to:
- provide, on a first area (101) of the display unit (11), information about a determined node state condition of at least one first node of the energy network including alerts in cases of detected errors/malfunctions in the first node and/or in the energy network and guidance information for troubleshooting and maintenance of the first node,
wherein the first node comprising one or more devices including a combination of electrical energy generation elements, electrical energy storage elements and/or electrical energy loads and electrical components for permitting the distribution of the electrical energy with other nodes of the energy network;
- provide, on a second area (102) of the display unit (11), adjacent to and below the first area (101), information about a determined global state condition of the energy network; and
- provide, on a third area (103) of the display unit (11), adjacent to and below the second area (102), configuration information of the user interface (100).

15. The non-transitory computer program product of claim 14, wherein said code instructions being further configured to:
- provide, on a first extension area (201) of the display unit (11), between the first area (101) and the second area (102), information regarding a status of the one or more devices of the first node;
- provide, on a second extension area (202) of the display unit (11), between the first extension area (201) and the second area (102), performance information regarding how the electrical energy is flowing through the first node and its neighbor nodes;
- provide, on a third extension area (203) of the display unit (11), between the second extension area (202) and the second area (102), information about reliability of one or more nodes of the plurality of nodes that are connected to the first node; and
- provide, on a fourth extension area (204) of the display unit (11), between the second area (102) and the third area (103), information about a status of charges of the one or more devices and a status of electrical energy trades to/from other nodes of the energy network.
